# EUROPEAN PATENT APPLICATION

(11) **EP 4 420 533 A1**
(43) Date of publication of application: **28.08.2024**
(21) Application number: 23855831.6
(22) Date of filing: 08.11.2023
(51) Int. Cl.: A24B 15/28, A24B 15/34, A24B 15/32, A24B 15/40, A24B 15/16, A24D 3/02, A24D 3/06, A24D 1/02, A24D 1/04

(54) **COOLING BLOCK-CONTAINING CAPSULE FOR AEROSOL-GENERATING ARTICLE, AND AEROSOL-GENERATING ARTICLE COMPRISING SAME**

(30) Priority: 30.12.2022 KR 20220190582
(71) Applicant: KT&G Corporation, Daedeok-gu Daejeon 34337 (KR)
(72) Inventor: SONG, In Beom, Daejeon 34128 (KR); SONG, Ho Rim, Daejeon 34128 (KR); WOO, Ji Seob, Daejeon 34128 (KR); JUNG, Kyung Bin, Daejeon 34128 (KR); LEE, Chang Gook, Daejeon 34128 (KR)
(74) Representative: Ter Meer Steinmeister & Partner
(86) International application number: PCT/KR2023/017900
(87) International publication number: WO 2024/143873

(57) **Abstract**

The present disclosure provides a capsule for an aerosol generating article including a cooling block including a cooling agent A, a cooling agent B, and a cooling agent C in a specific combination, a method of preparing the same, and an aerosol generating article including the capsule.

## Description

### Technical Field

The present disclosure relates to a capsule for an aerosol generating article including a cooling block, and an aerosol generating article including the same.

### Background Art

Some cooling agents have been used on their own in shaving foam, toothpaste, gargles, and food, but none have been used in an aerosol generating article as a substitute for menthol using a cooling block with a flavored design technology of the cooling agent.

Meanwhile, the current aerosol generating articles have a proportion of menthol higher than that of other flavored substances, and therefore, it is necessary to exhibit main characteristics of menthol or differentiation and diversity thereof compared to menthol of the related art to ensure competitiveness. In addition, the current issue is to develop a menthol substitute and ensure a product application technology to maintain competitiveness of an existing product and continuously provide users' convenience through implementation of similar characteristics of menthol.

Meanwhile, sensory characteristics of menthol may be divided into main characteristics and secondary characteristics, the main characteristics correspond to cooling (refreshing, body), fresh (clean taste without drying), and minty (peppermint flavor) characteristics, and the secondary characteristics correspond to herbal, green, and earthy characteristics.

If some specific cooling agents are used alone, it is considered that the implement the sensory characteristics of such complex menthol is extremely limited. The similar characteristics of menthol are able to be implemented only through a blending technology that reflects characteristics of various cooling agents, and thus, it is essential to develop a recipe for it.

### Disclosure of the Invention

### Technical Goals

In such circumstances, in order to overcome the current situation and/or limitations of the technology of the related art described above, an object of the present disclosure is to provide a capsule for an aerosol generating article and an aerosol generating article including the same using a cooling block including a combination of specific cooling agents.

However, goals to be achieved are not limited to those described above, and other goals not mentioned above are clearly understood by one of ordinary skill in the art from the following description.

### Technical Solutions

According to an embodiment of the present disclosure, there is provided a capsule for an aerosol generating article including a cooling block, wherein the cooling block includes: at least one cooling agent A selected from a group consisting of WS-3, WS-5, WS-23, and menthyl lactate; at least one cooling agent B selected from a group consisting of isopulegol, 4-terpineol, menthone, and menthyl acetate; and at least one cooling agent C selected from a group consisting of cis-3-hexenol, hexyl alcohol, 1,4-cineol, and eucalyptol.

According to an aspect of the present disclosure, there is provided an aerosol generating article including the capsule for the aerosol generating article described above.

According to another aspect of the present disclosure, there is provided a method of preparing a capsule for an aerosol generating article including a cooling block, the method including: step S 1 of preparing a film material; step S2 of preparing a capsule with the film material and the cooling block; step S3 of hardening the capsule; and step S4 of drying the capsule, wherein the cooling block includes: at least one cooling agent A selected from a group consisting of WS-3, WS-5, WS-23, and menthyl lactate; at least one cooling agent B selected from a group consisting of isopulegol, 4-terpineol, menthone, and menthyl acetate; and at least one cooling agent C selected from a group consisting of cis-3-hexenol, hexyl alcohol, 1,4-cineol, and eucalyptol.

### Effects

A cooling block including cooling agents in a specific combination according to an embodiment of the present disclosure may realize main sensory characteristics of a menthol article such as cooling, fresh, and minty characteristics to complement taste acceptance and satisfaction, and also complement the characteristics instead of menthol even in a product under the restriction of menthol, thereby realizing the feeling of menthol in a most excellent manner.

It should be understood that the effects of the present disclosure are not limited to the above-described effects, but are construed as including all effects that can be inferred from the configurations and features described in the following description or claims of the present disclosure.

### Brief Description of Drawings

FIG. 1 is a diagram illustrating a schematic configuration of a combustible aerosol generating article including a capsule including a cooling block according to an embodiment of the present disclosure.
FIG.2 is a drawing illustrating a schematic configuration of a non-combustible (heating type) aerosol generating article including a capsule including a cooling block according to an embodiment of the present disclosure.

### Best Mode for Carrying Out the Invention

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, the terms first, second, A, B, (a), and (b) may be used to describe constituent elements of the embodiments. These terms are used only for the purpose of discriminating one component from another component, and the nature, the sequences, or the orders of the components are not limited by the terms.

A component, which has the same common function as a component included in any one embodiment, will be described by using the same name in other embodiments. Unless disclosed to the contrary, the description of any one embodiment may be applied to other embodiments, and the specific description of the repeated configuration will be omitted.

Throughout the disclosure, the term "aerosol generating article" refers to an article capable of generating an aerosol, and the term "tobacco (a cigarette)" contains a non-combustible heating type aerosol generating article as well as a combustible aerosol generating article such as a cigar, etc. The aerosol generating article may include an aerosol generating material or an aerosol forming substrate. The aerosol generating article may further include solid materials (tobacco medium) based on tobacco raw materials such as plate-shaped leaf tobacco, cut tobacco, or reconstituted tobacco raw materials. The aerosol generating material may include a volatile compound.

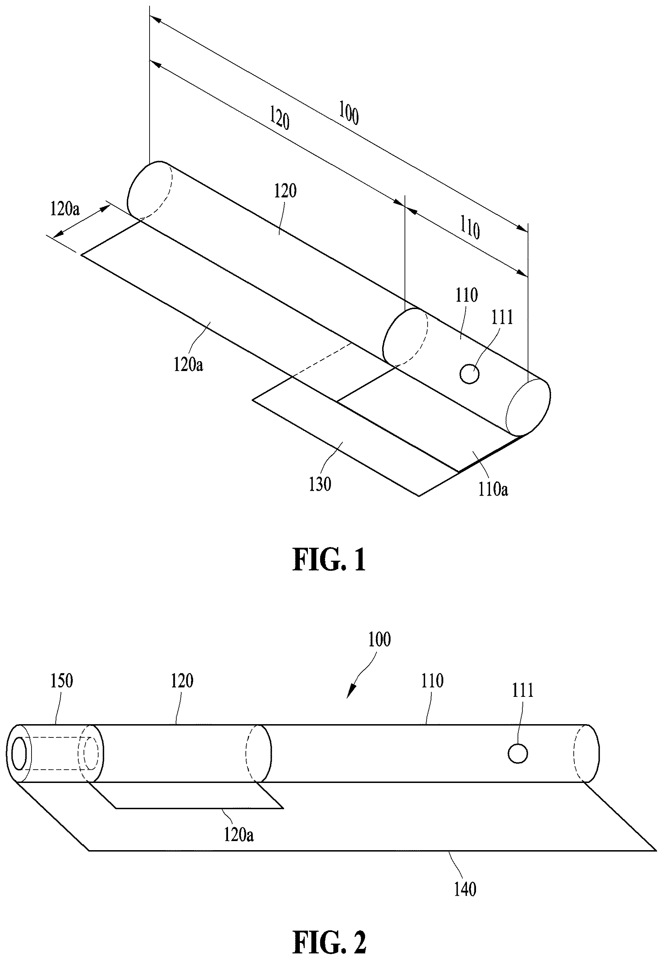

Throughout the disclosure, the term "upstream" or "upstream direction" refers to a direction away from the mouth of a user who smokes the aerosol generating article and a "downstream" or "downstream direction" refers to a direction closer to the mouth of the user who smokes the aerosol generating article. For example, in a combustible aerosol generating article 100 shown in FIG. 1, a tobacco medium portion 120 is located at an upstream side or in an upstream direction of a filter portion 110.

Further, in the present disclosure, although one of a combustible cigarette of the aerosol generating article 100 or a non-combustible (heating type) cigarette used together with an aerosol generating device (not shown) such as an electronic cigarette device is selected and described as an example, embodiments are not limited thereto, and all of the above concepts may be included.

In addition, a cooling block may refer to a fragrance or coolant composition consisting of a combination of specific cooling agents that are developed by the present disclosure to impart fresh, clean, and minty feeling which are the characteristics of menthol.

According to an embodiment of the present disclosure, there is provided a capsule for an aerosol generating article including a cooling block.

The cooling block includes
at least one cooling agent A selected from a group consisting of WS-3, WS-5, WS-23, and menthyl lactate;
at least one cooling agent B selected from a group consisting of isopulegol, 4-terpineol, menthone, and menthyl acetate; and
at least one cooling agent C selected from a group consisting of cis-3-hexenol, hexyl alcohol, 1,4-cineol, and eucalyptol.

The cooling agent A included in the cooling block indicates a base-type cooling agent having a relatively low volatility that imparts body and persistence to a flavor, and specific type of the cooling agent A may include WS-3 (N-ethyl-5-methyl-2-(1-methylethyl)cyclohexanecarboxamide), WS-5 (N-(ethoxycarbonylmethyl)-p-menthane-3-carboxamide), WS-23 (N,2,3-trimethyl-2-isopropyl butanamide), and menthyl lactate, and a combination thereof, if necessary.

WS-3 has good persistency of cooling sensation, and WS-5 has a similar cooling effect compared to the WS-3, but off-flavors such as saltiness may be exhibited. In addition, mentyl lactate may bring an effect of imparting cooling sensation to a certain extent and an effect of improving the persistency for that, WS-23 may also impart the cooling sensation, but a degree of imparting may be lower than that of mentyl lactate, and the mentyl lactate may have a clean or mild taste compared to WS-23.

In addition, when the mentyl lactate is used together with WS-3, a bitter taste of WS-3 may be neutralized. Accordingly, from comprehensive determination, it is desirable to use a mixture of WS-3 and the mentyl lactate to realize the cooling sensation, persistency, clean taste, mild feeling, etc.

Meanwhile, a content of the base-type cooling agent A having the low volatility included in the cooling block of the capsule according to an embodiment of the present disclosure may be 10 wt% to 60 wt%, desirably 15 wt% to 55 wt%, and more desirably 20 wt% to 50 wt%.

When the content of the cooling agent A exceeds the upper limit, overall harmony of the fragrance (harmony of cooling sensation, minty characteristics, fresh, and herbal) may be broken, and the fragrance may become heavier, which may lead to negative consequences such as suppressing the expression of fragrance of middle type cooling agent B and top type cooling agent C. When the content thereof is lower than the lower limit, the content of the cooling agent A is small, and the effect of imparting the cooling sensation from this may be low, thereby reducing the harmony.

In addition, a content of WS-3 which may be included in the cooling agent A may be 5 wt% to 20 wt% and desirably 10 wt% to 15 wt% with respect to a total weight of the cooling block. In addition, a content of menthyl lactate may be 5 wt% to 40 wt% and more desirably 30 wt% to 40 wt%.

When the contents of WS-3 and menthyl lactate fall within the above desirable ranges, as described above, it may be the most excellent in overall aspects of cooling sensation, consistency, clean taste, mild feeling, etc., and a difference in effect according to these ranges is also clearly shown in examples and comparative examples which will be described in detail below.

The cooling agent B included in the cooling block may indicate a middle type cooling agent having a medium volatility which improves the characteristics of the fragrance, and specific type of the cooling agent B may include isopulegol, 4-terpineol, menthone, and menthyl acetate, and a combination thereof, if necessary.

Among the types of cooling agent B, menthone may give a minty feeling, and menthyl acetate connects the base, middle, and top notes harmoniously as a whole so that individual characteristics of the base cooling agent A described above and the top type cooling agent C which will be described below are not greatly emphasized. In addition, isopulegol gives it an earthy feeling, and 4-terpineol may give it a harsh feeling. However, isopulegol is an expensive ingredient, and coarse feeling of 4-terpineol may bring negative feeling to a smoker, and therefore, a combination of menthone and menthyl acetate is preferable in consideration of the object of the present disclosure which is to implement characteristics most similar to menthol.

Meanwhile, a content of the middle type cooling agent B having the medium volatility included in the cooling block of the capsule according to an embodiment of the present disclosure may be 5 wt% to 50 wt%, desirably 10 wt% to 45 wt%, and more desirably 15 wt% to 40 wt%.

When the content of the cooling agent B exceeds the upper limit, the connection between the base type cooling agent A and the top type cooling agent C may be hindered, which may lead to degradation of overall harmony of the fragrance, and the expression of the unique fragrance characteristic of the top type cooling agent C may be limited. When the content thereof is less than the lower limit, the content of the cooling agent B is small, and the effect of imparting the minty characteristic from this may be low, thereby reducing the harmony.

In addition, a content of menthone which may be included in the cooling agent B may be 10 wt% to 30 wt% and desirably 15 wt% to 25 wt% with respect to a total weight of the cooling block. In addition, a content of menthyl acetate may be 5 wt% to 20 wt% and more desirably 2 wt% to 8 wt%.

As shown in a comparison between Examples 1 and 2 and Comparative Example 2 which will be described below, it is found that, when the contents of menthone and menthyl acetate correspond to the desired ranges, fragrance strength and harmony are excellent, the minty feeling as menthol is imparted, and harmony may be effectively achieved with a combination of characteristics of the top, middle, and base type cooling agents.

The cooling agent C included in the cooling block may indicate a top type cooling agent having high volatility which is responsible for strength, unique characteristics, and diffusivity of the fragrance, and the specific type of the cooling agent C may include cis-3-hexenol, hexyl alcohol, 1,4-cineol, eucalyptol, and a combination thereof, if necessary.

Among the types of the cooling agent C, cis-3-hexenol may impart scent of green such as the smell of grass, and hexyl alcohol may impart oily feeling in addition to the smell. In addition, eucalyptol may enhance the minty characteristic and the cooling effect, and impart natural, herbal, and fresh notes, while 1,4-cineol shows herbal, green, fresh, and light fragrance characteristics, but has a disadvantage of being less harmonious than eucalyptol. Therefore, in this respect, it is desirable to use eucalyptol as the cooling agent C.

Meanwhile, a content of the top type cooling agent C having the high volatility included in the cooling block of the capsule according to an embodiment of the present disclosure may be more than 0 wt% and 40 wt% or less, and desirably 0.5 wt% to 10 wt% or 0.5 wt% to 5 wt%.

When the content of the cooling agent C exceeds the upper limit, the unique fragrance characteristic may be realized in an unnatural and artificial manner, heavy scent may occur, and the harmony with the middle cooling agent B may be disturbed. On the other hand, when the cooling agent C is not included, the completeness of the fragrance may be degraded due to no unique fragrance characteristic, and the fresh and light part may be generally lost.

These results may also be confirmed by a sensory evaluation comparison between Examples 1 and 2, and Comparative Example 3 in which eucalyptol is not included, which will be described below. Through this, it is found that the cooling agent C has a great effect on menthol refreshment, aroma intensity enhancement, and aftertaste refreshment, despite the small amount contained in the cooling block.

Meanwhile, in addition to the cooling agent A, the cooling agent B, and the cooling agent C described above in detail, the cooling block included in the capsule for the aerosol generating article according to an embodiment of the present disclosure may further include a solvent for mixing the agents described above. In this case, the solvent used may include one or more selected from a group consisting of alcohol (ethanol), propylene glycol, and glycerol, and may be desirably alcohol.

At this time, a content of the solvent included in the cooling block may be about 50 wt% or less and desirably about 15 wt% to 30 wt% with respect to the total weight of the cooling block.

As described above, by adjusting the amount of the solvent included in the cooling block, only the fragrance strength may be adjusted while maintaining the harmony of the cooling agents A, B, and C to maintain their role as menthol substitutes.

Meanwhile, the cooling block may be prepared, for example, by a method including the following steps:
step S 1 of preparing raw materials of a cooling agent A, a cooling agent B, and a cooling agent C; and
step S2 of mixing the cooling agent A, the cooling agent B, and the cooling agent C with a solvent.

In this case, the cooling agent A may be at least one cooling agent A selected from a group consisting of WS-3, WS-5, WS-23, and menthyl lactate,
the cooling agent B may be at least one cooling agent B selected from a group consisting of isopulegol, 4-terpineol, menthone, and menthyl acetate; and
the cooling agent C may be at least one cooling agent C selected from a group consisting of cis-3-hexenol, hexyl alcohol, 1,4-cineol, and eucalyptol.

In addition, the solvent that may be used in step S2 is substantially the same as the type of solvent described above, and may be desirably alcohol.

The capsule including the cooling block according to an embodiment of the present disclosure may be used for an aerosol generating article, and the aerosol generating article may correspond to a smoking article including a tobacco medium portion, a filter portion, and a wrapper.

In this case, the capsule including the cooling block may be included in the filter portion.

Meanwhile, the amount of the cooling block included in the capsule may be 50 g to 250 g, and desirably 100 g to 105 g with respect to 100 kg of the tobacco medium (tobacco cuts). When the amount of the cooling block is more than or less than the above range, the effect of the cooling block intended herein may be reduced.

In addition, the filter portion included in the aerosol generating article may be divided into two or more segments, for example, a first filter portion, a second filter portion, and the like. When at least one of the two or more segments includes the capsule including the cooling block according to an embodiment of the present disclosure, it may be within the scope of the present disclosure, regardless of a position where it is disposed. Furthermore, a shape of the capsule may correspond to, but is not limited to, spherical or cylindrical, and may desirably have the form of a core-shell structure.

As an example, when the capsule for the aerosol generating article has a core-shell structure, specifically, a core portion may include the cooling block, and the shell portion may be composed of a film material containing water, plasticizer, agar, pectin, and sodium alginate.

In addition, the tobacco medium portion may typically include a tobacco substance containing nicotine such as leaf tobacco, and may further include an excipient such as a binder or other additives. In an example, the tobacco medium included in the tobacco medium portion may be prepared in the form of granules containing the tobacco substance and the excipient.

In the present disclosure, the tobacco substance is a substance constituting an aerosol forming material, and may be pieces of tobacco leaf, a tobacco stalk, tobacco dust generated during tobacco processing, and/or leaf strips of tobacco leaf. Tobacco leaves may be, but are not limited to, at least one selected from xanthomas, Burley tobacco, oriental tobacco, cigar leaves, and toasted tobacco.

Meanwhile, as shown in FIG. 1 (a combustible aerosol generating article), the wrapper according to an embodiment of the present disclosure may include a wrapper for each component of the aerosol generating article, and may be divided into a tobacco medium portion wrapper 120a wrapping the tobacco medium portion, and a filter portion wrapper (filter wrapping paper) 110a wrapping a filter. In addition, as described above, when the filter portion is divided into a plurality of segments, each segment may include a wrapper that wraps around it. In addition, in order to fix the connection between the tobacco medium portion and the filter portion, a tipping wrapper 130 wrapping a partial area of the tobacco medium portion and the filter portion may be included, and in order to maintain the entire shape or the like of the aerosol generating article, an outer wrapper positioned at an outermost portion of the aerosol generating article while wrapping all of the tobacco medium portion, the filter portion, and the like may be included.

In the tipping wrapper which combines the tobacco medium portion and the filter, one or more holes may be formed selectively along a circumferential direction so that the outside air may be introduced or an internal gas may be leaked. This has an effect of achieving an air dilution rate of a cigarette and adjusting the amount of delivery of mainstream smoke components.

Meanwhile, the capsule including the cooling block according to an embodiment of the present disclosure may be included in a non-combustible heating type aerosol generating article as shown in FIG. 2.

According to another aspect of the present disclosure, there is provided a method of preparing a capsule for an aerosol generating article including a cooling block, the method including:
step S 1 of preparing a film material;
step S2 of preparing the capsule with the film material and the cooling block;
step S3 of hardening the capsule; and
step S4 of drying the capsule.

The cooling block may include at least one cooling agent A selected from a group consisting of WS-3, WS-5, WS-23, and menthyl lactate;
at least one cooling agent B selected from a group consisting of isopulegol, 4-terpineol, menthone, and menthyl acetate; and
at least one cooling agent C selected from a group consisting of cis-3-hexenol, hexyl alcohol, 1,4-cineol, and eucalyptol.

Step S1 of preparing the film material of the present embodiment may include preparing a material of a film surrounding a cooling block, and may include a process of forming the film material by dissolving components consisting of the film material after weighing amounts of components consisting of the film material. At this time, the components consisting of the film material may be agar, pectin, sodium alginate, and glycerin as a plasticizer, and these components may be dissolved in water to form a film material. The film material prepared at this time may have a viscosity of, for example, 400 to 700 centipoise (cp) and desirably 500 to 650 cps.

According to the roles of components forming the film material, agar first acts as a hardening function according to a temperature, so that a shape of a capsule at the beginning of molding may be formed. Pectin acts as an intermediate regulator between agar and sodium alginate, forms an initial shape of the capsule by acting on a degree of hardening of agar and the calcium ion bonding of sodium alginate, and also plays a role in improving stability and moisture absorption, and contributing to film formation.

The sodium alginate plays a role of hardening with calcium ions, controls the strength of the capsule, forms a film, and may also improve moisture absorption stability due to ion curing.

As a plasticizer, glycerin helps formability of a capsule and plays a role of imparting elasticity to the capsule. However, as the amount of glycerin increases, the elasticity of the capsule increases. However, absorption stability may decrease over the long term due to strong hygroscopicity of glycerin. On the other hand, when the amount of glycerin is small, the capsule may be easily broken by external factors due to low elasticity. Therefore, it is important to combine an appropriate amount of glycerin.

The film material may be composed of 45 to 55 volume% of agar, 35 to 45 volume% of pectin, and 5 to 15 volume% of sodium alginate, for example, excluding water and glycerin.

Meanwhile, step S2 of preparing the capsule may be a step of preparing the capsule by wrapping the cooling block with the film material. The specific shape of the capsule is as described above.

Also, the capsule prepared through step S2 may then go through hardening step S3. In this case, the capsule may be hardened using an ethanol preparation solution, and the hardening may be performed by a method of immersing the capsule in the ethanol preparation solution of 70% to 100% for 3 minutes to 5 minutes.

After hardening step S3, step S4 of drying the capsule may be performed according to a specific temperature, humidity, airflow, or rotation velocity. When the drying is completed, the capsule may be separated by batch and stored in a drying plate to proceed with a harmonization process. Through this, the capsule for the aerosol generating article may be finally prepared.

Hereinafter, the configuration of the present disclosure and effects thereof will be described in more detail through examples and comparative examples. However, the examples are merely intended for the purpose of describing the disclosure in more detail, and thus, the scope of the disclosure is not limited to the embodiments.

### Examples

### (1) Preparation Example 1: Preparation of cooling block

### Example 1

In order to prepare the cooling block according to an embodiment of the present disclosure, WS-3 and menthyl lactate in a powder form, and menthone, menthyl acetate, and eucalyptol in a liquid form were prepared as fragrance raw materials. The prepared raw materials of WS-3, menthyl lactate, menthone, menthyl acetate, and eucalyptol were mixed and stirred for a predetermined period of time so that they were sufficiently dissolved in alcohol which is a solvent.

At this time, contents of the added raw materials and alcohol were adjusted as shown in Table 1 below.

### Example 2

A cooling block was prepared in the same manner as in Example 1, except that cooling agents were dissolved in alcohol by adjusting the contents of the cooling agents such that the content of WS-3 was adjusted to 25 wt% and the content of menthone was adjusted to 10 wt%.

### Comparative Example 1

A cooling block was prepared in the same manner as in Example 1, except that WS-23 was dissolved in alcohol instead of WS-3. At this time, WS-23 was added so that a content of the added WS-23 was set to 15 wt% with respect to a total weight of the prepared cooling block.

### Comparative Example 2

A cooling block was prepared in the same manner as in Example 1, except that 4-terpineol was dissolved in alcohol instead of menthone. At this time, 4-terpineol was added so that a content of the added 4-terpineol was set to 20 wt% with respect to the total weight of the prepared cooling block.

### Comparative Example 3

A cooling block was prepared in the same manner as in Example 1, except that 1,4-cineol was dissolved in alcohol instead of eucalyptol. At this time, 1,4-cineol was added so that a content of the added 1,4-cineol was set to 2 wt% with respect to the total weight of the prepared cooling block.

The types and contents of the cooling agents included in the cooling block prepared in Examples 1 and 2 and Comparative Examples 1 to 3 are summarized and shown in Table 1 below.

**[Table 1]**

| Classification | WS-3 | Menthyl lactate | Menthon | Menthyl acetate | Eucalypt ol | WS-23 | 4-terpineol | 1,4-cineol | Alcohol (ethanol) |
|---|---|---|---|---|---|---|---|---|---|
| Example 1 | 15 | 35 | 20 | 5 | 2 | 0 | 0 | 0 | 23 |
| Example 2 | 25 | 35 | 10 | 5 | 2 | 0 | 0 | 0 | 23 |
| Comparative Example 1 | 0 | 35 | 20 | 5 | 2 | 15 | 0 | 0 | 23 |
| Comparative Example 2 | 15 | 35 | 0 | 5 | 2 | 0 | 20 | 0 | 23 |
| Comparative Example 3 | 15 | 35 | 20 | 5 | 0 | 0 | 0 | 2 | 23 |

### (The units of numerical values in Table 1 above all correspond to wt%)

### (2) Preparation Example 2: Preparation of capsule including cooling block

A film material was prepared by dissolving 50 volume% of agar, 40 volume% of pectin, and 10 volume% of sodium alginate in glycerin and water. Then, the cooling block prepared in Example 1 was inserted into the film material, and a spherical capsule was prepared using a capsule preparation device. After that, the hardening process was performed by immersing the spherical capsule in an ethanol preparation solution prepared by mixing distilled water and ethanol at a volume ratio of 7:3 for 5 minutes, and this was dried to finally prepare a cooling block-containing capsule.

### (3) Test Example 1: Sensory evaluation of prepared cooling block

16 panelists in KT&G R&D smoked an aerosol generating article including the prepared cooling block-containing capsule of each of Examples 1 and 2 and Comparative Examples 1 to 3 in the filter portion, and evaluated intensity of smoking taste, feeling of menthol refreshment, smooth throat swallowing, fragrance strength, harmony, clean aftertaste, and satisfaction based on 9 points. An average value of evaluation results is obtained and shown in Table 2 below.

**Table 2**

| Classification | Intensity of smoking flavor | Feeling of menthol refreshment | Smooth throat swallowing | Fragrance strength | Harmo ny | Clean aftertaste | Satisfa ction |
|---|---|---|---|---|---|---|---|
| Example 1 | 4.23 | 5.03 | 4.54 | 5.17 | 5.24 | 5.22 | 5.14 |
| Example 2 | 4.20 | 4.61 | 4.12 | 4.53 | 4.67 | 4.62 | 4.56 |
| Comparative Example 1 | 3.54 | 4.54 | 4.08 | 4.51 | 4.52 | 4.02 | 4.08 |
| Comparative Example 2 | 4.14 | 4.58 | 4.53 | 3.58 | 4.06 | 4.53 | 4.13 |
| Comparative Example 3 | 4.13 | 4.02 | 4.14 | 4.01 | 4.07 | 3.58 | 3.87 |

Referring to the results shown in Table 2, it is found that the evaluation of Examples 1 and 2, in which all of WS-3, menthyl lactate, menthone, menthyl acetate, and eucalyptol are included, shows more excellent results in terms of smoke flavor intensity, feeling of menthol refreshment, fragrance strength, harmony, clean aftertaste, and overall satisfaction, compared to Comparative Examples 1 to 3 which are lack of WS-3, menthone, and eucalyptol, respectively.

More specifically, it is found that, in Comparative Example 1 which is lack of WS-3, the degrees of the smoke flavor intensity and clean aftertaste among various items are more inferior, and in Comparative Example 2 which is lack of menthone, the fragrance strength and the harmony are more inferior. In addition, it is found that, in Comparative Example 3 which is lack of eucalyptol, the evaluation of the feeling of menthol refreshment, fragrance strength, harmony, and clean aftertaste is inferior than those in the examples.

Accordingly, a smoker may figure out that the overall satisfaction of Examples 1 and 2 is more excellent than that of Comparative Examples 1 to 3.

On the other hand, in comparison between Examples 1 and 2 in which the contents of WS-3 and menthone are adjusted differently, Example 2 in which an excessive amount of WS-3 or a small amount of menthone is added, showed a slight difference in terms of the feeling of menthol refreshment, smooth throat swallowing, fragrance strength, harmony, and clean aftertaste, and thus, showed a slightly inferior result in terms of the overall satisfaction, compared to Example 1.

### (4) Test Example 2: Comparison of sensory evaluation with current cigarettes

### Comparison between aerosol generating article including capsule of Preparation Example 2 and current ESSE CHANGE 1 mg

The cooling block-containing capsule prepared in Preparation Example 2 was applied to the aerosol generating article.

Then, 13 panelists of KT&G R&D smoked each of current ESSE CHANGE 1 mg (a test product in which some menthol is mixed and applied to a secondary flavoring agent when preparing ESSE CHANGE 1 mg) and the aerosol generating article including the cooling block-containing capsule of Preparation Example 2, and evaluated intensity of smoking taste, feeling of menthol refreshment, smooth throat swallowing, fragrance strength, harmony, clean aftertaste, and satisfaction based on 9 points. An average value of evaluation results is obtained and shown in Table 3 below.

**[Table 3]**

| Classificatio n | Intensity of smoking flavor | Feeling of menthol refreshment | Smooth throat swallowing | Fragrance strength | Harmony | Clean aftertaste | Satisfaction |
|---|---|---|---|---|---|---|---|
| Current | 4.04 | 3.19 | 5.27 | 3.42 | 4.73 | 5.08 | 4.92 |
| Substitute | 4.00 | 3.23 | 5.15 | 3.46 | 4.54 | 5.04 | 4.88 |

### Comparison between aerosol generating article including capsule of Preparation Example 2 and normal ESSE CHANGE 1 mg

16 panelists of KT&G R&D smoked each of normal ESSE CHANGE 1 mg (a test product in which menthol and the cooling block are applied without mixing to a secondary flavoring agent) and the aerosol generating article including the cooling block-containing capsule of Preparation Example 2, and performed the evaluation in the same manner as described above. An average value of evaluation results is obtained and shown in Table 4 below.

**[Table 4]**

| Classificatio n | Intensity of smoking flavor | Feeling of menthol refreshment | Smooth throat swallowing | Fragrance strength | Harm ony | Clean aftertaste | Satisfactio n |
|---|---|---|---|---|---|---|---|
| Current | 4.04 | 2.71 | 4.93 | 2.86 | 4.57 | 5.00 | 5.00 |
| Substitute | 3.86 | 3.18 | 5.29 | 3.93 | 4.96 | 5.07 | 5.07 |

### Comparison between aerosol generating article including capsule of Preparation Example 2 and current Raison French Black

16 panelists of KT&G R&D smoked each of current Raison French Black and the aerosol generating article including the cooling block-containing capsule of Preparation Example 2, and performed the evaluation in the same manner as described above. An average value of evaluation results is obtained and shown in Table 5 below.

**[Table 5]**

| Classificatio n | Intensity of smoking flavor | Feeling of menthol refreshment | Smooth throat swallowing | Fragrance strength | Harmony | Clean aftertaste | Satisfaction |
|---|---|---|---|---|---|---|---|
| Current | 3.91 | 3.66 | 4.59 | 4.19 | 4.56 | 4.38 | 4.56 |
| Substitute | 4.16 | 4.00 | 4.72 | 4.41 | 4.88 | 4.72 | 5.03 |

From the results of Test Example 2, it is found that, compared to the aerosol generating articles such as current ESSE CHANGE 1 mg, normal ESSE CHANGE 1 mg, and Raison French Black, the aerosol generating article including the cooling block-containing capsule according to an embodiment of the present disclosure shows higher feeling of menthol refreshment, clean aftertaste, and overall satisfaction, and the cooling block complements taste acceptance and satisfaction of menthol products of the related art or realizes main sensory characteristics in an excellent manner.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

**Explanation of Reference numerals**

| | | | |
|---|---|---|---|
| 100: | Aerosol generating article | 120a: | Tobacco medium portion wrapper (inner |
| 110: | Filter portion | wrapping paper) | |
| 110a: | Filter wrapping paper | 130: | Tipping wrapper |
| 111: | Capsule for aerosol generating article | 140: | Outer wrapping paper |
| 120: | obacco medium portion | 150: | Front end plug |

## Claims

1. A capsule for an aerosol generating article comprising a cooling block, wherein the cooling block comprises:
at least one cooling agent A selected from a group consisting of WS-3, WS-5, WS-23, and menthyl lactate;
at least one cooling agent B selected from a group consisting of isopulegol, 4-terpineol, menthone, and menthyl acetate; and
at least one cooling agent C selected from a group consisting of cis-3-hexenol, hexyl alcohol, 1,4-cineol, and eucalyptol.

2. The capsule of claim 1, wherein the cooling agent A comprises WS-3 and menthyl lactate.

3. The capsule of claim 2, wherein the cooling agent B comprises menthone and menthyl acetate.

4. The capsule of claim 3, wherein the cooling agent C comprises eucalyptol.

5. The capsule of claim 1, comprising:
with respect to a total weight of the cooling block,
the cooling agent A in an amount of 10 wt% to 60 wt%;
the cooling agent B in an amount of 5 wt% to 50 wt%; and
the cooling agent C in an amount of more than 0 wt% and 40 wt% or less.

6. The capsule of claim 1, further comprising: a solvent in addition to the cooling agent A, the cooling agent B, and the cooling agent C.

7. The capsule of claim 6, wherein the solvent comprises one or more selected from a group consisting of alcohol, propylene glycol, and glycerol, and
a content of the solvent is 50 wt% or less with respect to a total weight of the cooling block.

8. The capsule of claim 1, comprising:
with respect to a total weight of the cooling block,
WS-3 in an amount of 10 wt% to 15 wt%;
menthyl lactate in an amount of 30 wt% to 40 wt%;
menthone in an amount of 15 wt% to 25 wt%;
menthyl acetate in an amount of 2 wt% to 8 wt%;
eucalyptol in an amount of 0.5 wt% to 5 wt%; and
alcohol in an amount of 15 wt% to 30 wt%.

9. The capsule of claim 1, wherein the capsule for the aerosol generating article has a core-shell structure, a core portion comprises the cooling block, and a shell portion is formed of a film material.

10. The capsule of claim 9, wherein the film material comprises water, a plasticizer, agar, pectin, and sodium alginate.

11. An aerosol generating article comprising the capsule for the aerosol generating article of one of claims 1 to 10.

12. The aerosol generating article of claim 11, comprising: a tobacco medium portion; a filter portion; and a wrapper, wherein the capsule for the aerosol generating article is included in the filter portion.

13. The aerosol generating article of claim 11, wherein the aerosol generating article is combustible type or non-combustible heating type.

14. A method of preparing a capsule for an aerosol generating article comprising a cooling block, the method comprising:
step S1 of preparing a film material;
step S2 of preparing a capsule with the film material and the cooling block;
step S3 of hardening the capsule; and
step S4 of drying the capsule,
wherein the cooling block comprises:
at least one cooling agent A selected from a group consisting of WS-3, WS-5, WS-23, and menthyl lactate;
at least one cooling agent B selected from a group consisting of isopulegol, 4-terpineol, menthone, and menthyl acetate; and
at least one cooling agent C selected from a group consisting of cis-3-hexenol, hexyl alcohol, 1,4-cineol, and eucalyptol.
